# EUROPEAN PATENT APPLICATION

(11) **EP 2 270 671 A1**
(43) Date of publication of application: **05.01.2011**
(21) Application number: 10157575.1
(22) Date of filing: 24.03.2010
(51) Int. Cl.: G06F 13/10

(54) **Host device and image forming apparatus controlled by host device, and peripheral device control method**

(30) Priority: 25.06.2009 KR 20090057035
(71) Applicant: SAMSUNG ELECTRONICS CO., LTD., Suwon-si, Gyeonggi-do (KR)
(72) Inventor: Park, Dong-chae, Gyeonggi-do (KR); Koo, Dong-hoan, Gyeonggi-do (KR)
(74) Representative: Walaski, Jan Filip

(57) **Abstract**

A peripheral device control method of the host device includes receiving setting information regarding one or more peripheral devices which are previously found as a result of searching and storing the received setting information, displaying a setting information list using the stored setting information, and displaying a user interface (UI) to represent one of first to third universal drivers which matches a target peripheral device selected from the setting information list, wherein the one or more peripheral devices include at least one image forming apparatus, at least one image scanning apparatus and at least one image transceiving apparatus, and wherein the first to third universal drivers share the stored setting information. Therefore, there is no need to search for peripheral devices for each universal driver program.

## Description

The invention relates to a host device, a peripheral device control method of the host device, and an image forming apparatus controlled by the host device. More particularly, aspects of the embodiments relate to a host device to register functions of peripheral devices found as a result of searching by an operation of a single driver program so that a user may use the functions, a peripheral device control method of the host device, and an image forming apparatus controlled by the host device.

Computers may be connected to peripheral devices, for example printers and scanners. Conventionally, peripheral devices such as printers or scanners are connected directly to a single computer.

However, according to development of networks, a plurality of printers and a plurality of scanners are being connected to a plurality of computers via a variety of networks, and accordingly users may select a desired device from among the plurality of printers and plurality of scanners connected via networks to computers.

In this situation, driver programs for each device need to be installed in computers to use printers and scanners, because driver programs differ according to manufacturer and model.

In other words, to use the plurality of printers and the plurality of scanners, users need to install driver programs for each printer and scanner even when the printers and scanners are connected via networks, which may cause inconveniences to users.

To avoid such inconveniences, a universal driver program for printers and a universal driver program for scanners may be provided, so that only a single driver program may be used to control all the plurality of printers or the plurality of scanner.

When a universal driver program for printers and a universal driver program for scanners are used, there is no need to separately install driver programs to use a predetermined printer or scanner.

However, a universal driver program for printers and a universal driver program for scanners are programs which are operated individually. Accordingly, a universal driver program for printers may be used to search for information regarding printers only over networks, and a universal driver program for scanners may be used to search for information regarding scanners only over networks.

Recently, multi-function devices combining various functions are being widely used rather than single function devices such as printers or scanners. However, conventionally, when using a universal driver program for printers and a universal driver program for scanners which are operated individually, there is a need to search for information regarding a multi-function device from each of the programs even when a single multi-function device is used on a network.

In other words, both the universal driver program for printers and the universal driver program for scanners may search for the same device, and thus there are problems that unnecessary time is spent by searching for overlapping devices.

Aspects of the embodiments provide a host device to register various peripheral devices searched during execution of a single driver program according to functions, so that a user may use the peripheral devices found as a result of one-time search, a peripheral device control method of the host device, and an image forming apparatus controlled by the host device.

In accordance with an exemplary embodiment, there is provided a peripheral device control method of a host device, in which at least one of a first universal driver capable of controlling at least one image forming apparatus, a second universal driver capable of controlling at least one image scanning apparatus and a third universal driver capable of controlling at least one image transceiving apparatus is installed, the method including receiving setting information regarding one or more peripheral devices which are previously found as a result of searching, and storing the received setting information; displaying a setting information list using the stored setting information; and displaying a user interface (UI) to represent one of the first to third universal drivers which matches a target peripheral device selected from the setting information list, wherein the one or more peripheral devices include the at least one image forming apparatus, the at least one image scanning apparatus and the at least one image transceiving apparatus, and wherein the first to third universal drivers share the stored setting information.

The setting information may include at least one of a name, an address, a location, a current status, a resolution, document source information, information regarding whether to support a page count function, the image type, the maximum supportable size, an optical resolution, a supportable image compression format, information regarding whether to support encryption, information regarding whether to support user authentication, and information regarding which function among a scanning function, a printing function and a faxing function is supported.

The displaying of the setting information list may include displaying a supportable function among the printing function, the scanning function and the faxing function using one of an icon, text and both an icon and text.

The method may further include selecting a default peripheral device from among the one or more peripheral devices shown in the displayed setting information list.

The receiving and storing of the setting information may include storing the received setting information in a registry of an operating system (OS) in the form of a file.

The method may further include updating the stored setting information at preset intervals by polling with the one or more peripheral devices.

The method may further include additionally searching for other peripheral devices and re-receiving setting information regarding the other peripheral devices found as a result of searching; and adding the re-received setting information to the stored setting information.

The method may further include controlling the one or more peripheral devices using the displayed UI.

The method may further include searching for one or more peripheral devices connected to the host device.

The displaying of the setting information list may include, if one of the first to third universal drivers is executed, displaying the setting information list using the stored setting information.

In accordance with another exemplary embodiment, there is provided a host device connected to one or more peripheral devices, the host device including a host interface to receive setting information regarding the one or more peripheral devices; a display unit to display a setting information list using the received setting information; a first universal driver capable of controlling at least one image forming apparatus among the one or more peripheral devices; a second universal driver capable of controlling at least one image scanning apparatus among the one or more peripheral devices; and a third universal driver capable of controlling at least one image transceiving apparatus among the one or more peripheral devices, wherein the display unit displays a user interface (UI) to represent one of the first to third universal drivers which matches a target peripheral device selected from the displayed setting information list, and wherein the first to third universal drivers share the received setting information.

The host device may further include a search processor to search for the one or more peripheral devices. The host interface may receive the setting information from the searched one or more peripheral devices, and the search processor may register the received setting information in a peripheral device database (DB).

One of the first to third universal drivers may search for the one or more peripheral devices. The host interface may receive the setting information from the searched one or more peripheral devices, and one of the first to third universal drivers may register the received setting information in one of a first peripheral device DB, a second peripheral device DB and a third peripheral device DB.

One of the first to third universal drivers may transmit the received setting information to the other two drivers, and the other two drivers may register the received setting information in the other two peripheral device DBs.

Contents in the first peripheral device DB to the third peripheral device DB may be exchanged between the first to third universal drivers every preset update period.

The search processor may update the setting information in the peripheral device DB at preset intervals by polling with the one or more peripheral devices.

The first to third universal drivers may update the setting information in the first to third peripheral device DBs at preset intervals by polling with the one or more peripheral devices.

In accordance with yet another exemplary embodiment, there is provided an image forming apparatus including a storage unit to store setting information; a peripheral device interface to receive a peripheral device search signal from a host device including a plurality of universal drivers which share setting information; an engine unit to perform an image forming job; and a controller to control the peripheral device interface to transmit the stored setting information to the host device if the peripheral device search signal is received via the peripheral device interface from the host device, and to control an operation of the engine unit according to an operation command for an image forming job if the operation command is received from the host device, wherein the image forming job is at least one of a scanning function, a printing function and a faxing function.

The peripheral device interface may receive a polling request signal from the host device. If the polling request signal is received from the host device, the controller may control the peripheral device interface to transmit the stored setting information to the host device.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:
FIG. 1 is a view illustrating a peripheral device control system according to an exemplary embodiment;
FIG. 2 is a block diagram illustrating a host device and a peripheral device according to an exemplary embodiment;
FIG. 3 is a block diagram illustrating a host device and a peripheral device according to another exemplary embodiment;
FIG. 4 is a block diagram illustrating a host device and a peripheral device according to yet another exemplary embodiment;
FIGS. 5A and 5B are views exemplarily illustrating user interfaces (UIs) displayed during searching for peripheral devices according to an exemplary embodiment;
FIGS. 6A to 6C are views exemplarily illustrating UIs to select a default device according to an exemplary embodiment; and
FIG. 7 is a flowchart explaining a peripheral device control method according to an exemplary embodiment.

Reference will now be made in detail to the exemplary embodiments of the present invention, examples of which are illustrated in the accompanying drawings, wherein like reference numerals refer to like elements throughout. The embodiments are described below in order to explain the aspects of the present invention by referring to the figures.

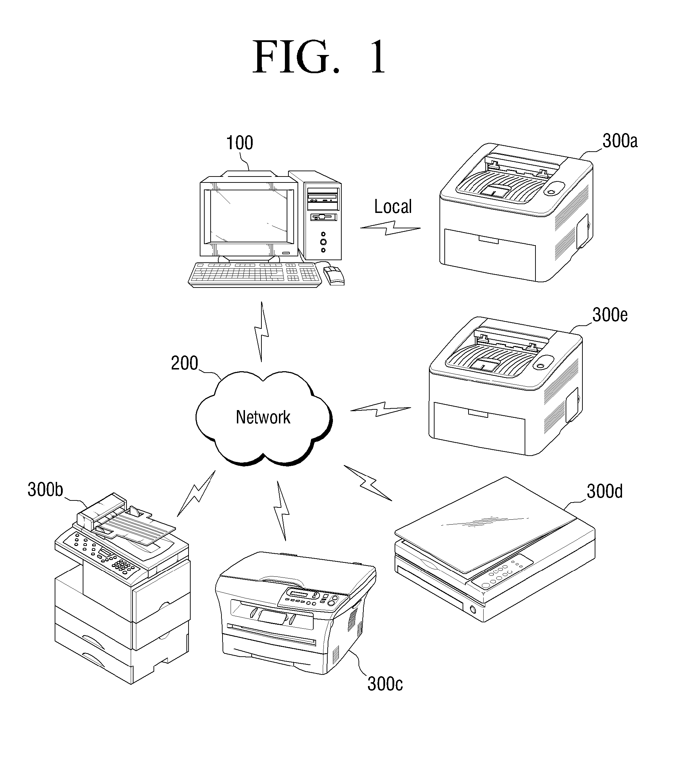

FIG. 1 is a view illustrating a peripheral device control system according to an exemplary embodiment.

The peripheral device control system shown in FIG. 1 includes a host device 100 and a plurality of peripheral devices 300a to 300e. In the peripheral device control system of FIG. 1, the host device 100 may be connected to the plurality of peripheral devices 300a to 300e via a local connection, such as a universal serial bus (USB), or via a network 200.

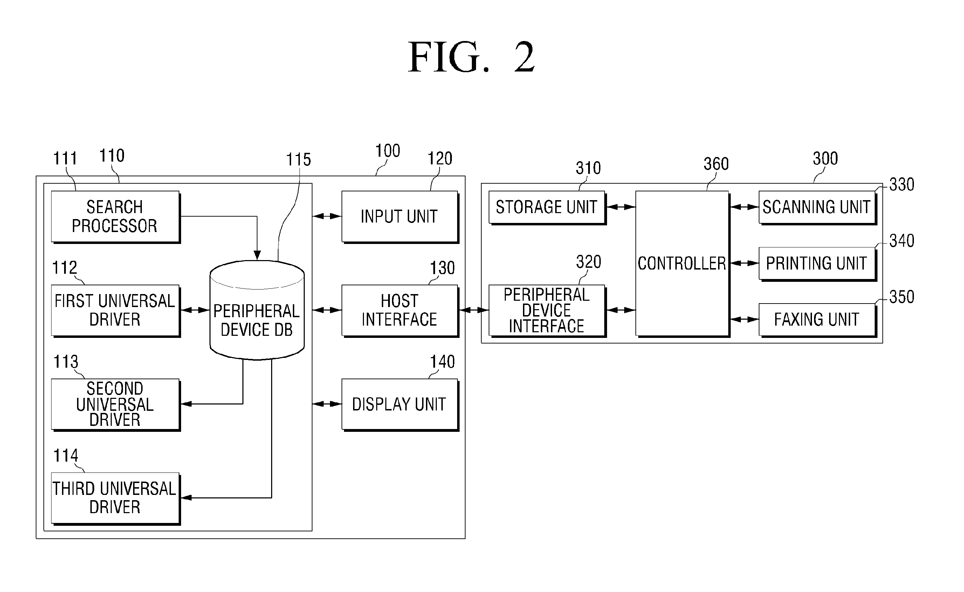

The host device 100 may include a first universal driver, a second universal driver and a third universal driver which are installed therein, to control functions of the plurality of peripheral devices 300a to 300e which are connected via the local connection or the network 200. The host device 100 may typically be a personal computer (PC), and will be described in detail with reference to FIGS. 2 to 4 below.

The plurality of peripheral devices 300a to 300e may have at least one of printing, scanning and faxing functions. As described above, the plurality of peripheral devices 300a to 300e may be connected to the host device 100 via the local connection or the network 200. In more detail, the plurality of peripheral devices 300a to 300e may be a single function device having a printing function or scanning function, or may be a multi-function device having various functions such as printing, scanning, faxing and copying functions. The plurality of peripheral devices 300a to 300e may include an image forming apparatus capable of generally performing a printing function, an image scanning apparatus capable of generally performing a scanning function, and an image transceiving apparatus capable of generally performing a faxing function.

As shown in FIG. 1, the peripheral device 300a is connected via the local connection to the host device 100, and the other four peripheral devices 300b to 300e are connected via the network 200 to the host device 100, but this is merely exemplary for convenience of description. Accordingly, there is no limitation to the number of peripheral devices connected to the host device 100, the number of peripheral devices connected via the local connection to the host device 100, and the number of peripheral devices connected via the network 200 to the host device 100.

FIG. 2 is a block diagram illustrating a host device 100 and a peripheral device 300 according to an exemplary embodiment of the present invention.

In FIG. 2, the host device 100 includes a main controller 110, an input unit 120, a host interface 130 and a display unit 140.

The main controller 110 includes a search processor 111, a first universal driver 112, a second universal driver 113, a third universal driver 114, and a peripheral device database (DB) 115. Although not shown in the drawings, the search processor 111, the first universal driver 112, the second universal driver 113, the third universal driver 114 and the peripheral device DB 115 included in the main controller 110 may be operated under the control of an operating system (OS).

When one of the first universal driver 112 to the third universal driver 114 is executed, the search processor 111 may be operated under the control of the OS to search for the plurality of peripheral devices 300a to 300e connected to the host device 100 via the local connection or the network 200.

The search processor 111 searches for the plurality of peripheral devices 300a to 300e and receives setting information regarding the plurality of peripheral devices 300a to 300e from the plurality of peripheral devices 300a to 300e. Also, the search processor 111 classifies the plurality of peripheral devices 300a to 300e according to functions using the received setting information, and registers the classified peripheral devices 300a to 300e in the peripheral device DB 150. Herein, the plurality of peripheral devices 300a to 300e may have a printing function, a scanning function and a faxing function.

The first universal driver 112 refers to a universal printer driver program capable of controlling a plurality of image forming apparatuses, and thus may control operations of peripheral devices having the printing function among the plurality of peripheral devices 300a to 300e. In more detail, the first universal driver 112 may control a peripheral device having only a single printing function and a multi-function peripheral device having various functions in addition to the printing function.

For example, if a user desires to print print data, the first universal driver 112 may control an operation of a peripheral device set as a default device for printing (namely, a printer). In more detail, under the control of the first universal driver 112, the print data which the user desires to print may be converted into a format that the printer can understand, and the converted print data and an operation command may be transmitted to the printer.

The second universal driver 113 refers to a universal scanner driver program capable of controlling a plurality of image scanning apparatuses, and thus may control operations of peripheral devices having the scanning function among the plurality of peripheral devices 300a to 300e. In more detail, the second universal driver 113 may control a peripheral device having only a single scanning function and a multi-function peripheral device having various functions in addition to the scanning function.

If a user desires to scan a predetermined document, the second universal driver 113 may control an operation of a peripheral device set as a default device for scanning (namely, a scanner), so that an image may be read out.

The third universal driver 114 refers to a universal scanner driver program capable of controlling a plurality of image transceiving apparatuses, and thus may control operations of peripheral devices having the faxing function among the plurality of peripheral devices 300a to 300e. In more detail, the third universal driver 114 may control a peripheral device having only a single faxing function and a multi-function peripheral device having various functions in addition to the faxing function.

If a user desires to transceive fax data, the third universal driver 114 may control an operation of a peripheral device set as a default device for transceiving fax data, so that the fax data may be transmitted or received.

The first to third universal drivers 112 to 114 set one of the peripheral devices 300a to 300e found as a result of searching by the search processor 111 to be a default peripheral device for each function. In this situation, a user may select a predetermined peripheral device from among the peripheral devices 300a to 300e, so that the selected peripheral device may be set as a default peripheral device for each function.

The peripheral device DB 115 refers to a DB to store setting information regarding the plurality of peripheral devices 300a to 300e found as a result of searching by the search processor 111. When the first to third universal drivers 112 to 114 are launched, the search processor 111 searches for the plurality of peripheral devices 300a to 300e connected to the host device 100, and then receives a plurality of response signals including information on functions of the plurality of peripheral devices 300a to 300e from the plurality of peripheral devices 300a to 300e. Subsequently, the search processor 111 classifies the plurality of peripheral devices 300a to 300e according to functions using the received response signals, and registers the classified the peripheral devices 300a to 300e in the peripheral device DB 115.

The peripheral device DB 115 may be used in common in the first universal driver 112 and the second universal driver 113. In other words, both of the first universal driver 112 and the second universal driver 113 may access the information registered in the peripheral device DB 115 by the search processor 111. In the exemplary embodiment, the setting information regarding the plurality of peripheral devices 300a to 300e is stored in a predetermined DB. However, the setting information may be stored in a registry of the OS in the form of a file.

The input unit 120 receives a user manipulation signal input by a user using an input device of the host device 100 for example a keyboard and a mouse. In the exemplary embodiment of the present invention, the user manipulation signal received by the input unit 120 may include an execution request signal to request execution of one of the first to third universal drivers 112 to 114, and a request signal to request setting of one of the plurality of peripheral devices 300a to 300e as a default peripheral device for each function.

The host interface 130 supports interfacing between the host device 100 and the plurality of peripheral devices 300a to 300e. The host interface 130 may enable the search processor 111 to transmit a peripheral device search signal for searching for the peripheral devices 300a to 300e connected to the host device 100 to each of the peripheral devices 300a to 300e, and to receive a response signal from each of the peripheral devices 300a to 300e. Additionally, the host interface 130 may transmit a polling request signal to each of the peripheral devices 300a to 300e.

In fact, the host device 100 needs to include an interface for connection to the peripheral device 300a via the local connection, and an interface for connection to the peripheral devices 300b to 300e via the network 200, but in the exemplary embodiment of the present invention, these interfaces are not distinguished for convenience of description.

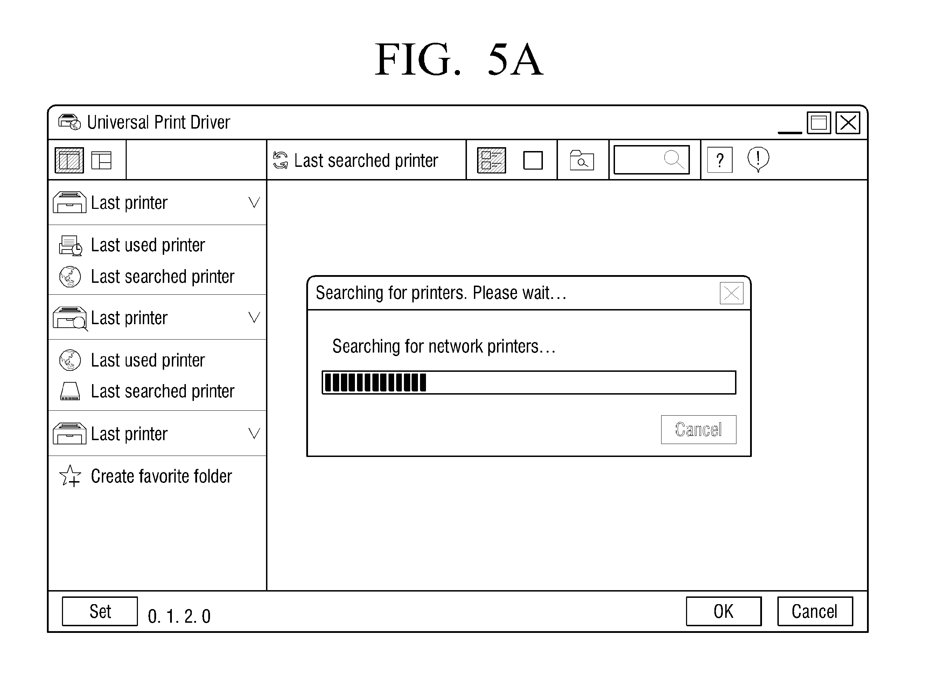

The display unit 140 displays information which is to be provided to a user by the host device 100. In the exemplary embodiment, the display unit 140 may display a list of the plurality of peripheral devices 300a to 300e found as a result of searching by the search processor 111, and may display various user interfaces (UIs) provided by the search processor 111 and the first to third universal drivers 112 to 114. UIs displayed on the display unit 140 will be described in detail with reference to FIGS. 5A to 6C below.

Referring to FIG. 2, the peripheral device 300 includes a storage unit 310, a peripheral device interface 320, an engine unit, and a controller 360. The engine unit includes a scanning unit 330, a printing unit 340 and a faxing unit 350.

The peripheral device 300 shown in FIG. 2 may be one of the plurality of peripheral devices 300a to 300e, and may be a multi-function device having all the printing, scanning and faxing functions. In other words, the peripheral device 300 shown in FIG. 2 may function as an image forming apparatus, an image scanning apparatus and an image transceiving apparatus.

The storage unit 310 stores all kinds of information required to perform operations of the peripheral device 300. For example, setting information regarding the peripheral device 300 may be stored in the storage unit 310. Herein, the setting information may include at least one of a name, an address, a location, a current status, a resolution, document source information, information regarding whether to support a page count function, the image type, the maximum supportable size, an optical resolution, a supportable image compression format, information regarding whether to support encryption, information regarding whether to support user authentication, and information regarding which function among scanning, printing and faxing functions is supported.

The peripheral device interface 320 supports interfacing between the peripheral device 300 and the host device 100. The peripheral device interface 320 may receive the peripheral device search signal from the host device 100, and may transmit the response signal in response to the peripheral device search signal to the host device. Additionally, the peripheral device interface 320 may receive from the host device 100 an operation command for an image forming job to control operations of the engine unit. The peripheral device interface 320 may receive the polling request signal from the host device 100, and may transmit a response signal in response to the polling request signal to the host device 100 under the control of the controller 360.

The scanning unit 330 generally performs the scanning function. In more detail, the scanning unit 330 may scan a document including data such as photos, images and texts and may read out an image.

The printing unit 340 generally performs the printing function. In other words, the printing unit 340 may print print data received from the host device 100 or print data stored in the peripheral device 300 onto printing medium.

The faxing unit 350 generally performs the faxing function to transceive fax data via a public switched telephone network (PSTN). The faxing unit 350 may transmit or receive fax data by communicating with other peripheral devices capable of supporting the faxing function or with a fax machine.

The controller 360 controls overall operations of the peripheral device 300. In more detail, the controller 360 may control signal input and output between the storage unit 310, the peripheral device interface 320, the scanning unit 330, the printing unit 340 and the faxing unit 350.

If the peripheral device search signal is received from the host device 100 via the peripheral device interface 320, the controller 360 extracts the setting information from the storage unit 310 and controls the peripheral device interface 320 to transmit the extracted setting information to the host device 100.

If the polling request signal is received from the host device 100 via the peripheral device interface 320, the controller 360 extracts the setting information from the storage unit 310 and controls the peripheral device interface 320 to transmit the extracted setting information to the host device 100.

Additionally, if the operation command for the image forming job is received from the host device 100 via the peripheral device interface 320, the controller 360 controls one of the scanning unit 330, the printing unit 340 and the faxing unit 350 to perform an operation corresponding to the received operation command.

As described above, the peripheral device 300 may support scanning, printing and faxing functions. However, there is no limitation to such functions, and accordingly the peripheral device 300 may support a copying function. Typically, the copying function may be performed by a combination of the printing and scanning functions.

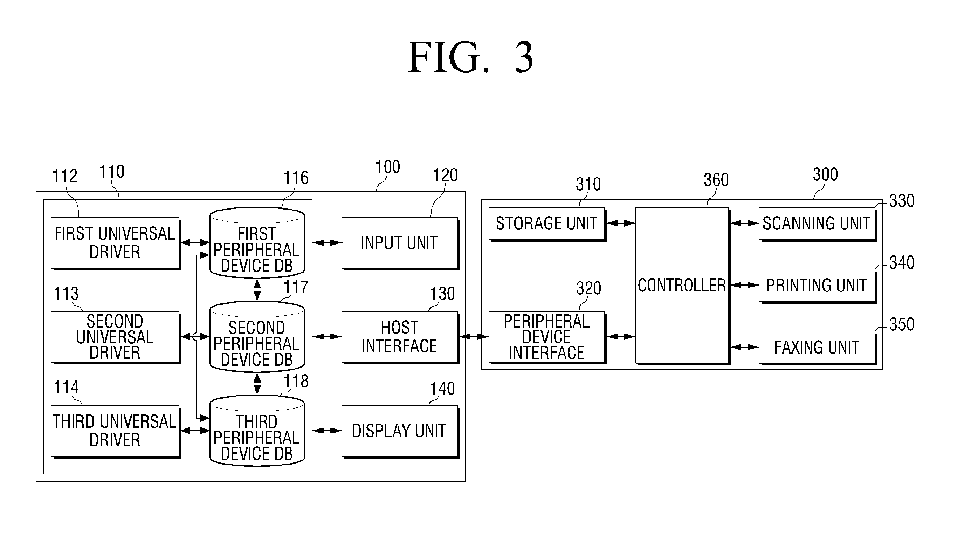

FIG. 3 is a block diagram illustrating a host device 100 and a peripheral device 300 according to another exemplary embodiment of the present invention.

The host device 100 shown in FIG. 3 includes a main controller 110, an input unit 120, a host interface 130 and a display unit 140. The host device 100 of FIG. 3 is configured in a similar manner to the host device 100 of FIG. 2. In FIG. 3, the same reference numerals denote the same or substantially similar elements as shown in FIG. 2, and only different functions are now described below.

The main controller 110 includes a first universal driver 112, a second universal driver 113, a third universal driver 114, a first peripheral device DB 116, a second peripheral device DB 117, and a third peripheral device DB 118.

In response to the execution request signal received by the input unit 120, the first universal driver 112 is executed under the control of the OS, to search for the plurality of peripheral devices 300a to 300e connected to the host device 100.

The first universal driver 112 classifies the plurality of peripheral devices 300a to 300e according to functions using the plurality of response signals in response to the peripheral device search signal which are respectively received from the plurality of peripheral devices 300a to 300e, and registers the classified peripheral devices 300a to 300e in the first peripheral device DB 116. Subsequently, the first universal driver 112 may transmit to the second universal driver 113 the setting information contained in the response signals received from the peripheral devices 300a to 300e. Accordingly, the first universal driver 112 and second universal driver 113 may share the setting information regarding the plurality of peripheral devices 300a to 300e.

In response to the execution request signal received by the input unit 120, the second universal driver 113 is executed under the control of the OS, to search for the plurality of peripheral devices 300a to 300e connected to the host device 100.

The second universal driver 113 classifies the plurality of peripheral devices 300a to 300e according to functions using the plurality of response signals in response to the peripheral device search signal which are respectively received from the plurality of peripheral devices 300a to 300e, and registers the classified peripheral devices 300a to 300e in the second peripheral device DB 117. Subsequently, the second universal driver 113 may transmit to the first universal driver 112 the setting information contained in the response signals received from the peripheral devices 300a to 300e. Accordingly, the first universal driver 112 and second universal driver 113 may share the setting information regarding the plurality of peripheral devices 300a to 300e.

The first peripheral device DB 116 is a DB that can be used by the first universal driver 112, and contains the setting information regarding the plurality of peripheral devices 300a to 300e registered by the first universal driver 112.

The second peripheral device DB 117 is a DB that can be used by the second universal driver 113, and contains the setting information regarding the plurality of peripheral devices 300a to 300e registered by the second universal driver 113.

The third peripheral device DB 118 is a DB that can be used by the third universal driver 114, and contains the setting information regarding the plurality of peripheral devices 300a to 300e registered by the third universal driver 114.

As described above, the first universal driver 112 and the second universal driver 113 may communicate with each other so as to share the setting information. Additionally, contents in the first to third peripheral device DBs 116 to 118 may be exchanged between the first to third universal drivers 112 to 114 at a predetermined update period, so that the first to third universal drivers 112 to 114 may share the setting information.

In the exemplary embodiment, the input unit 120, the host interface 130 and the display unit 140 of the host device 100 and the peripheral device 300 shown in FIG. 3 have the same functions as those shown in FIG. 2, and thus no further description is herein provided.

The host device 100 of FIG. 2 includes the search processor 111 in addition to the first to third universal drivers 112 to 114, and the peripheral device DB 115 of FIG. 2 may be used in common in the first to third universal drivers 112 to 114.

However, in the host device 100 of FIG. 3, one of the first to third universal drivers 112 to 114, instead of the search processor 111, may search for the peripheral devices 300a to 300e. Additionally, the first to third universal drivers 112 to 114 may manage the first to third peripheral device DBs 116 to 118, respectively. In this situation, contents in the first to third peripheral device DBs 116 to 118 may be exchanged by various methods between the first to third universal drivers 112 to 114, so that the first to third universal drivers 112 to 114 may share the setting information.

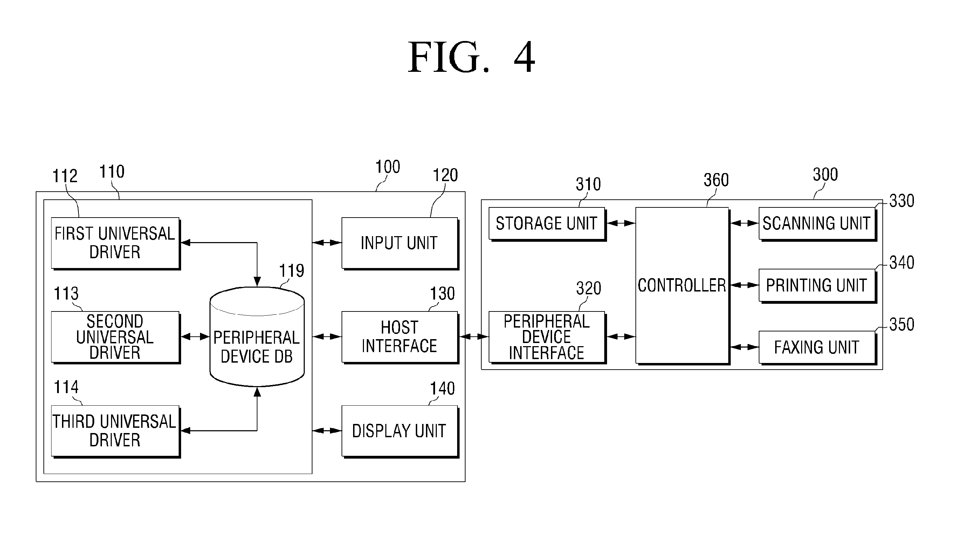

FIG. 4 is a block diagram illustrating a host device 100 and a peripheral device 300 according to yet another exemplary embodiment.

The first to third universal drivers 112 to 114 shown in FIG. 3 search for the peripheral devices 300a to 300e and manage the setting information regarding the peripheral devices 300a to 300e using the first to third peripheral DBs 116 to 118, respectively. However, the first to third universal drivers 112 to 114 shown in FIG. 4 may use a single peripheral device DB 119 only.

In this situation, all the setting information received by operations of the first to third universal drivers 112 to 114 may be stored in the peripheral device DB 119, and thus there is no need to separately share information. The other units shown in FIG. 4 have the same functions as those shown in FIG. 3, and thus no further description is herein provided.

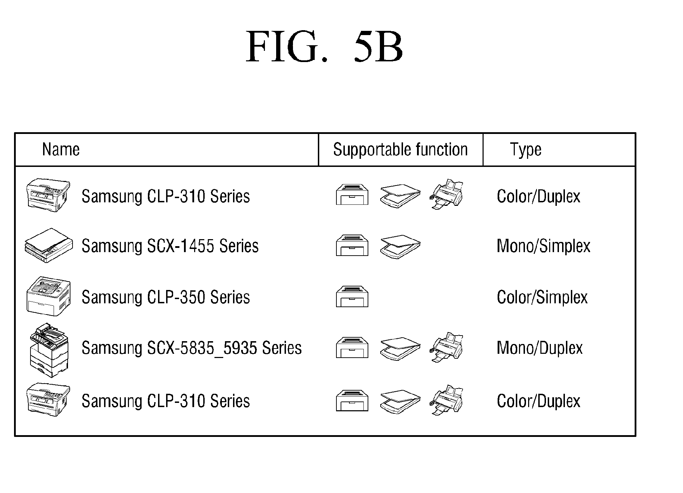

FIGS. 5A and 5B are views exemplarily illustrating UIs displayed during searching for peripheral devices according to an exemplary embodiment of the present invention.

A UI shown in FIG. 5A may be displayed on the display unit 140 while the first universal driver 112 of FIG. 3 searches for the peripheral devices 300a to 300e connected to the host device 100.

In general, if a user desires to use a printer, he or she may execute the first universal driver 112 for the printer. If the first universal driver 112 is executed, a UI showing a menu for the printer may be provided, and a message window stating that 'search for network printers is being performed' may be displayed on the UI. In this situation, the first universal driver 112 may search for not only a printer but also the plurality of peripheral devices 300a to 300e connected to the host device 100.

The UI shown in FIG. 5A may also be provided when the search processor 111 of FIG. 2 and the second and third universal drivers 113 and 114 shown in FIGS. 3 and 4 search for the peripheral devices 300a to 300e.

FIG. 5B exemplarily illustrates a UI to show a setting information list containing the setting information regarding the peripheral devices 300a to 300e received from the peripheral devices 300a to 300e. The setting information list may be provided after the search processor 111 of FIG. 2 and the first to third universal drivers 112 and 114 shown in FIGS. 3 and 4 completely search for the peripheral devices 300a to 300e connected to the host device 100.

As shown in FIG. 5B, the host device 100 is being connected to five peripheral devices, which have different functions. Additionally, functions supported by the five peripheral devices are displayed in the form of icons representing printing, scanning and faxing functions, so that a user may easily know which peripheral device supports which function. Herein, icons are used to display the functions of the peripheral devices, but there is no limitation to such icons. For example, functions of the peripheral devices may be represented by icons, texts or both icons and texts on the setting information list.

The setting information list may further display information regarding the type of peripheral device, for example color or mono. Desirably, the setting information list may additionally show a variety of information regarding the peripheral devices, for example a connection mode, a current status, address information and location information.

If the UI shown in FIG. 5B appears on the display unit 140, the user may recognize the type of peripheral device currently being connected to the host device 100, and may select a default peripheral device for each function.

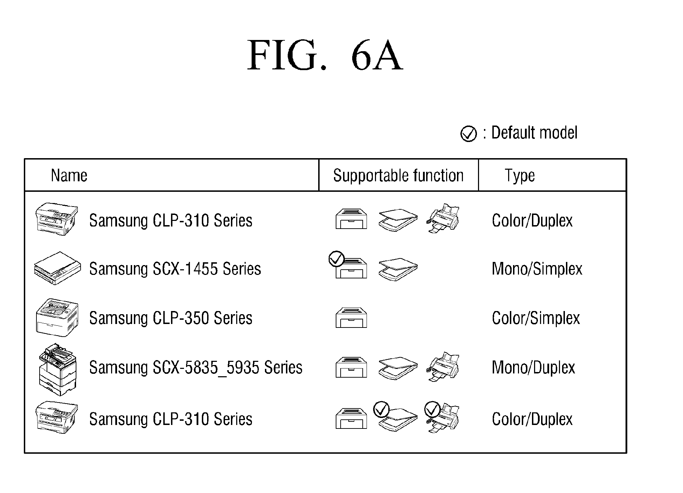

FIGS. 6A to 6C are views exemplarily illustrating UIs to select a default device according to an exemplary embodiment.

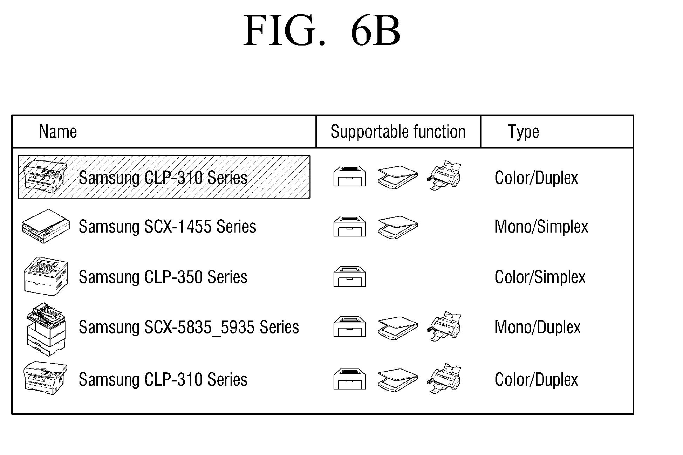

FIGS. 6A and 6B are views to explain a process of selecting a default peripheral device for each function when the UI showing the setting information list is displayed on the display unit 140 as shown in FIG. 5B.

As shown in FIG. 6A, a user may set different peripheral devices as default peripheral devices according to functions. In more details, the peripheral devices set for printing, scanning and faxing differ one another.

Additionally, when a single peripheral device is capable of performing all the printing, scanning and faxing functions, the user may set the peripheral device as a default peripheral device for printing, scanning and faxing, as shown in FIG. 6B.

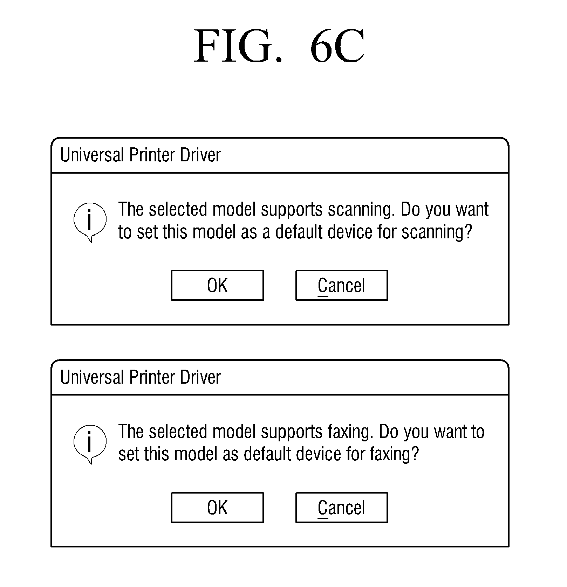

For example, when a first peripheral device on the top line of a setting information list shown in FIG. 6B is capable of performing all the printing, scanning and faxing functions, if a user sets the first peripheral device as a default peripheral device for printing, two message windows may simultaneously pop up to ask the user whether to set the first peripheral device as a default device for scanning and faxing, as shown in FIG. 6C.

If the user selects 'OK' on the two message windows shown in FIG. 6C, the first peripheral device, namely "Samsung CLP-310 Series", shown in FIG. 6B may be set as a default peripheral device for all of the printing, scanning and faxing.

Therefore, print data which a current user desires to print may be printed using the "Samsung CLP-310 Series". Additionally, if the user desires to scan a document or transceive fax data, the "Samsung CLP-310 Series" may also be used without a need to search for other peripheral devices.

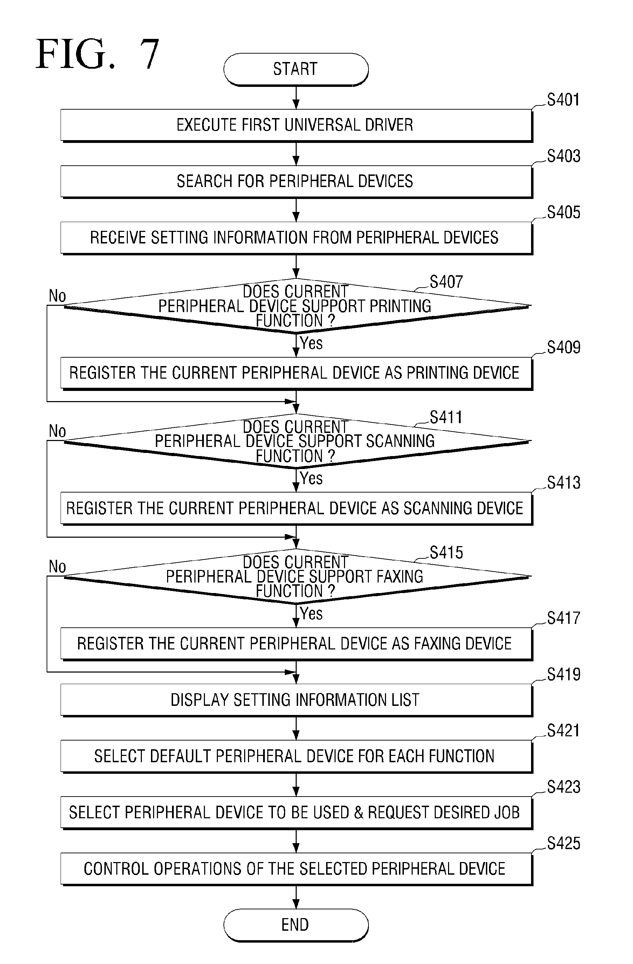

FIG. 7 is a flowchart explaining a peripheral device control method according to an exemplary embodiment.

A method by which the host device 100 controls the plurality of peripheral devices 300a to 300e is now described with reference to FIGS. 1 to 7. Herein, for convenience of description, the first universal driver 112 among the first to third universal drivers 112 to 114 is executed. In other words, when the second universal driver 113 or third universal driver 114 is executed, the method of FIG. 7 may also be performed.

If a user inputs an execution request signal for the first universal driver 112 using the input unit 120, the first universal driver 112 is executed under the control of the OS in operation S401.

The first universal driver 112 then searches for the peripheral devices 300a to 300e connected to the host device 100 in operation S403. In operation S403, all the peripheral devices 300a to 300e connected to the host device 100 may be found as a result of searching by the first universal driver 112, regardless of the connection mode.

In this situation, the first universal driver 112 is included in the host device 100 configured as shown in FIG. 3. In the host device 100 shown in FIG. 2, the search processor 111 may search for the peripheral devices 300a to 300e.

If the first universal driver 112 or the search processor 111 sends the peripheral device search signal to the peripheral devices 300a to 300e in order to search for the peripheral devices 300a to 300e, the peripheral devices 300a to 300e receive the peripheral device search signal and transmit their own setting information to the host device 100 in operation S405.

The first universal driver 112 receives the setting information from the peripheral devices 300a to 300e, and determines whether a current peripheral device supports the printing function based on the received setting information in operation S407.

If it is determined that the current peripheral device supports the printing function, the first universal driver 112 registers the current peripheral device as a printing device in the peripheral device DB 115 or in the first peripheral device DB 116 in operation S409.

The first universal driver 112 then determines whether the current peripheral device supports the scanning function in operation S411, and if so, registers the current peripheral device as a scanning device in the peripheral device DB 115 or in the first peripheral device DB 116 in operation S413.

Furthermore, the first universal driver 112 determines whether the current peripheral device supports the faxing function in operation S415, and if so, registers the current peripheral device as a faxing device in the peripheral device DB 115 or in the first peripheral device DB 116 in operation S417.

Subsequently, the first universal driver 112 displays the setting information list containing the setting information regarding the peripheral devices 300a to 300e on the display unit 140 in operation S419. Accordingly, the user selects a default peripheral device for each function while monitoring the setting information list displayed on the display unit 140 in operation S421. In this situation, the default peripheral device may be set by user selection, or may be automatically selected among peripheral devices having all the functions.

After operation S421, the user selects a peripheral device to be used, and requests that the selected peripheral device perform a desired job in operation S423. In this situation, the peripheral device to be used may be the peripheral device set as a default peripheral device in operation S421.

The first universal driver 112 then controls operations of the selected peripheral device, so that the selected peripheral device performs the desired job in operation S425.

While the first universal driver 112 searches for the peripheral devices 300a to 300e as shown in FIG. 7, it is understood that aspects of the embodiments are not limited thereto. Accordingly, the second universal driver 113 or the third universal driver 114 may be used to search for the peripheral devices 300a to 300e, and may control the peripheral devices 300a to 300e to perform their respective functions.

As described above, the first to third universal drivers 112 to 114 are used to search for the peripheral devices 300a to 300e connected to the host device 100, and to register the peripheral devices 300a to 300e based on the setting information regarding the peripheral devices 300a to 300e. Therefore, there is no need to repeat the search of the peripheral devices 300a to 300e, when a user desires to activate other functions.

While there have been illustrated and described what are considered to be exemplary embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, more than one image area may be selected, enlarged, and added to the captured image, or the selected image area may not be enlarged. Furthermore, multiple keywords may be applied to one icon. Accordingly, it is intended, therefore, that the present invention not be limited to the various exemplary embodiments disclosed, but that the present invention includes all embodiments falling within the scope of the appended claims.

## Claims

1. A peripheral device control method of a host device, in which at least one of a first universal driver capable of controlling at least one image forming apparatus, a second universal driver capable of controlling at least one image scanning apparatus and a third universal driver capable of controlling at least one image transceiving apparatus is installed, the method comprising:
receiving setting information regarding one or more peripheral devices which are previously found as a result of searching, and storing the received setting information;
displaying a setting information list using the stored setting information; and
displaying a user interface (UI) to represent one of the first to third universal drivers which matches a target peripheral device selected from the setting information list,
wherein the one or more peripheral devices comprise the at least one image forming apparatus, the at least one image scanning apparatus and the at least one image transceiving apparatus, and
wherein the first to third universal drivers share the stored setting information.

2. The method according to claim 1, wherein the setting information comprises at least one of a name, an address, a location, a current status, a resolution, document source information, information regarding whether to support a page count function, the image type, the maximum supportable size, an optical resolution, a supportable image compression format, information regarding whether to support encryption, information regarding whether to support user authentication, and information regarding which function among a scanning function, a printing function and a faxing function is supported.

3. The method according to claim 2, wherein the displaying of the setting information list comprises displaying a supportable function among the printing function, the scanning function and the faxing function using one of an icon, text and both an icon and text.

4. The method according to any one of claims 1 to 3, further comprising:
selecting a default peripheral device from among the one or more peripheral devices shown in the displayed setting information list.

5. The method according to any one of claims 1 to 4, wherein the receiving and storing of the setting information comprises storing the received setting information in a registry of an operating system (OS) in the form of a file.

6. The method according to claim 1 or claim 5, further comprising:
updating the stored setting information at preset intervals by polling with the one or more peripheral devices.

7. The method according to claim 5, further comprising:
additionally searching for other peripheral devices and re-receiving setting information regarding the other peripheral devices found as a result of searching; and
adding the re-received setting information to the stored setting information.

8. The method according to any one of claims 1 to 7, further comprising:
controlling the one or more peripheral devices using the displayed UI.

9. The method according to any one of claims 1 to 8, further comprising:
searching for one or more peripheral devices connected to the host device.

10. The method according to any one of claims 1 to 9, wherein the displaying of the setting information list comprises, if one of the first to third universal drivers is executed, displaying the setting information list using the stored setting information.

11. A host device connected to one or more peripheral devices, the host device comprising:
a host interface to receive setting information regarding the one or more peripheral devices;
a display unit to display a setting information list using the received setting information;
a first universal driver capable of controlling at least one image forming apparatus among the one or more peripheral devices;
a second universal driver capable of controlling at least one image scanning apparatus among the one or more peripheral devices; and
a third universal driver capable of controlling at least one image transceiving apparatus among the one or more peripheral devices,
wherein the display unit displays a user interface (UI) to represent one of the first to third universal drivers which matches a target peripheral device selected from the displayed setting information list, and
wherein the first to third universal drivers share the received setting information.

12. The host device according to claim 11, further comprising:
a search processor to search for the one or more peripheral devices,
wherein the host interface receives the setting information from the searched one or more peripheral devices, and
wherein the search processor registers the received setting information in a peripheral device database (DB).

13. The host device according to claim 11, wherein one of the first to third universal drivers searches for the one or more peripheral devices,
wherein the host interface receives the setting information from the searched one or more peripheral devices, and
wherein one of the first to third universal drivers registers the received setting information in one of a first peripheral device DB, a second peripheral device DB and a third peripheral device DB.

14. The host device according to claim 13, wherein one of the first to third universal drivers transmits the received setting information to the other two drivers, and
wherein the other two drivers register the received setting information in the other two peripheral device DBs.

15. The host device according to claim 13, wherein contents in the first peripheral device DB to the third peripheral device DB are exchanged between the first to third universal drivers every preset update period.
